# FASCICULE DE BREVET EUROPEEN

(11) **EP 3 172 411 B1**
(45) Date de publication et mention de la délivrance du brevet: **20.06.2018**
(21) Numéro de dépôt: 15759859.0
(22) Date de dépôt: 22.07.2015
(51) Int. Cl.: F01D 11/00, F01D 17/10, F02C 7/28, F02C 9/18

(54) **SYSTÈME D'ALIMENTATION EN AIR SOUS PRESSION INSTALLÉ DANS UNE TURBOMACHINE D'AÉRONEF COMPORTANT DES MOYENS D'ÉTANCHÉITÉ**
SYSTEM ZUM ZUFÜHREN VON DRUCKLUFT IN EINEM FLUGZEUGTURBINENTRIEBWERK MIT DICHTUNGSVORRICHTUNG
SYSTEM FOR SUPPLYING PRESSURISED AIR INSTALLED IN AN AIRCRAFT TURBINE ENGINE INCLUDING SEALING MEANS

(30) Priorité: 25.07.2014 FR 1457192
(43) Date de publication de la demande: 31.05.2017
(73) Titulaire: SAFRAN AIRCRAFT ENGINES, 75015 Paris (FR)
(72) Inventeur: GALLET, François, F-77550 Moissy-Cramayel Cedex (FR)
(74) Mandataire: Brevalex
(86) Numéro de dépôt international: PCT/FR2015/052012
(87) Numéro de publication internationale: WO 2016/012715

(56) Documents cités:
- US-A- 3 777 489
- US-A1- 2011 079 018
- US-A1- 2013 312 260
- US-B1- 6 178 989

## Description

### DOMAINE TECHNIQUE

La présente invention se rapporte au domaine des turbomachines d'aéronef, et plus particulièrement au domaine général des systèmes d'alimentation en air sous pression prévus pour de telles turbomachines, notamment des systèmes d'alimentation des réservoirs de carburant d'aéronef en air sous pression prélevé depuis un compresseur de turbomachine.

L'invention peut s'appliquer à tout type de turbomachines d'aéronef, par exemple telles que les turboréacteurs et les turbopropulseurs. Plus préférentiellement, l'invention peut s'appliquer à un turboréacteur double corps et double flux.

Elle concerne plus précisément un système d'alimentation en air sous pression installé dans une turbomachine d'aéronef et un procédé d'assemblage d'un tel système d'alimentation en air sous pression.

### ÉTAT DE LA TECHNIQUE

Dans le domaine général des turbomachines d'aéronef, il est connu de prélever de l'air chaud sous pression, habituellement refroidi avant son utilisation, pour diverses tâches, par exemple pour réaliser des opérations de dégivrage des ailes, ou encore pour des besoins en climatisation, par exemple d'une cabine d'aéronef durant une phase d'ascension, voire aussi pour l'alimentation en air de pressurisation des réservoirs de carburant d'aéronef.

En particulier, les réservoirs de carburant d'aéronef nécessitent d'être alimentés en air sous pression pour y réduire la pression partielle de carburant. En pratique, le carburant est généralement du kérosène. En réduisant la présence de vapeur de carburant dans le réservoir et à proximité de celui-ci, il est possible de réduire les risques d'auto-inflammation du carburant.

A cet effet, il est connu de prélever de l'air chaud sous pression à partir d'un compresseur de turbomachine d'aéronef, par exemple un compresseur basse ou haute pression. La haute température de l'air prélevé est due à la pression élevée de l'air dans l'étage de compresseur où s'effectue le prélèvement.

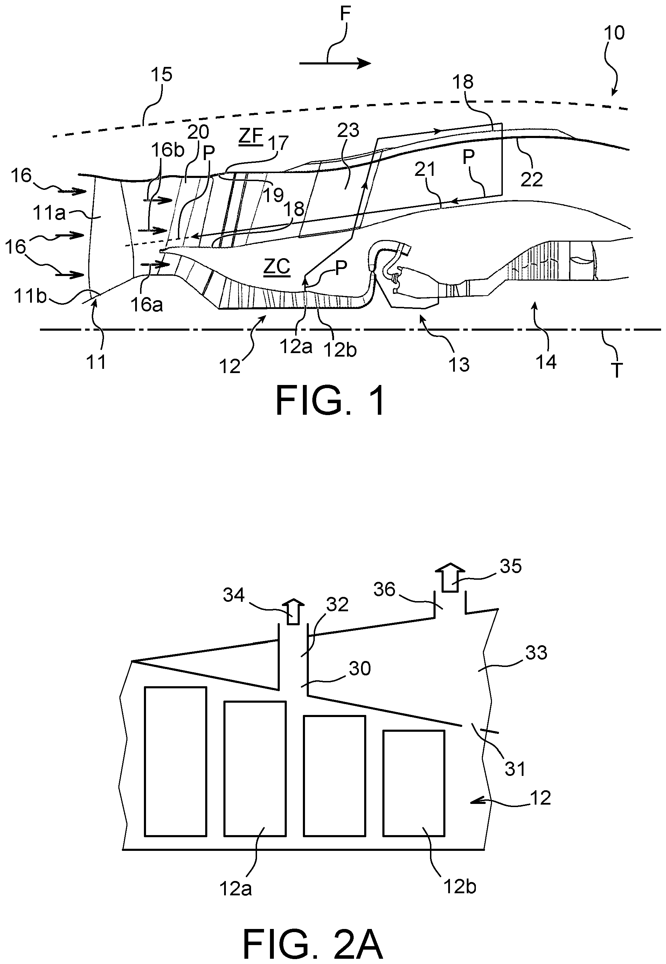

On a illustré schématiquement sur la figure 1, en semi-coupe axiale, un exemple de turboréacteur 10 à double flux, de révolution autour d'un axe de rotation T, sur lequel est prévu un prélèvement d'air chaud sous pression depuis un étage de compresseur pour l'alimentation en air chaud pressurisé d'un réservoir de carburant.

Le turboréacteur 10 comporte, d'amont en aval dans le sens de l'écoulement F des gaz à l'intérieur du turboréacteur 10, une soufflante 11, un compresseur 12, une chambre de combustion 13 et des turbines 14, ce turboréacteur 10 étant destiné à être fixé par des moyens appropriés sous une aile d'un avion ou sur la partie arrière du fuselage d'un avion.

La soufflante 11 comporte une pluralité d'aubes de soufflante 11a qui sont fixées à leurs extrémités radialement internes sur la périphérie du disque de soufflante 11b du turboréacteur 10 qui est lui-même fixé à l'extrémité amont d'un arbre (non représenté) du turboréacteur 10. Les aubes de soufflante 11a sont entourées extérieurement par un carter de soufflante monté à l'extrémité amont de la nacelle 15 qui est sensiblement cylindrique et s'étend vers l'aval autour du compresseur 12, de la chambre de combustion 13 et des turbines 14 du turboréacteur 10.

Cette nacelle 15 permet de canaliser le flux d'air 16 entrant dans le turboréacteur 10. Une partie 16a de ce flux d'air, formant le flux primaire ou flux chaud, pénètre dans le compresseur 12, puis est mélangé à du carburant et brûlé dans la chambre de combustion 13, pour être ensuite injecté dans les turbines 14 afin de fournir de l'énergie aux aubes de rotor des turbines 14 et entraîner en rotation l'arbre du compresseur 12 et de la soufflante 11.

L'autre partie 16b du flux d'air 16 entrant dans le turboréacteur 10, formant le flux secondaire ou flux froid, s'écoule autour du corps du turboréacteur 10 à l'intérieur d'un carter intermédiaire 17 puis d'une conduite extérieure de soufflante 18 (encore appelée OFD pour « Outlet Fan Duct » en anglais) entourée par des capots de la nacelle 15, pour fournir une poussée supplémentaire s'ajoutant à celle fournie par les gaz de combustion éjectés des turbines 14. L'air froid du flux secondaire peut être utilisé pour refroidir par exemple des circuits d'huile ou d'air chaud, généralement à l'aide d'échangeurs de chaleur.

Le carter intermédiaire 17 comporte deux viroles cylindriques 18 et 19 coaxiales, respectivement interne et externe, qui sont reliées entre elles par des bras ou aubages radiaux 20.

De plus, la conduite extérieure de soufflante 18 comporte une paroi intérieure 22 sensiblement cylindrique qui est reliée à un carter interne 21 coaxial par au moins un bras radial tubulaires 23, appelé également « bras de servitudes », à l'intérieur duquel passent des servitudes telles que des conduits de circulation de fluides et des câbles électriques. La conduite extérieure de soufflante 18 est fixée à son extrémité amont sur l'extrémité aval de la virole externe 19 du carter intermédiaire 17, et à son extrémité aval sur l'extrémité amont d'une tuyère (non représentée) de la nacelle.

En outre, il est également représenté sur la figure 1 le compartiment ou zone de soufflante ZF (désignée encore par « Fan Zone » en anglais) compris entre les capots de la nacelle 15 et les éléments 17 et 18 qui délimitent extérieurement la veine du flux secondaire. Le compartiment formé par le carter interne 21 est appelé zone de coeur ZC (désignée encore par « Core Zone » en anglais), et est relié à la zone de soufflante ZF par le bras de servitudes 23.

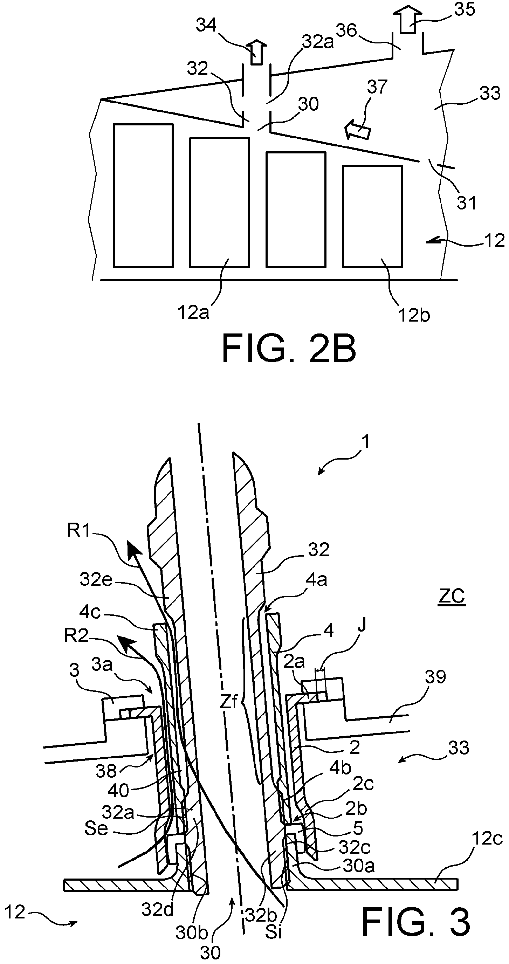

Dans une réalisation développée par la demanderesse, afin d'assurer la pressurisation d'un réservoir de carburant de l'avion équipé du turboréacteur 10, il est prévu un circuit de prélèvement d'air chaud sous pression, schématisé par le chemin fléché P sur la figure 1, depuis un étage 12a du compresseur 12. En particulier, pour assurer la pression nécessaire dans le réservoir de carburant, il est prévu un prélèvement d'air chaud sous pression au niveau d'un étage 12a du compresseur 12 dont l'accès nécessite de réaliser un tube de prélèvement 32 (représenté sur les figures 2A et 2B) qui traverse un volume à haute pression 33 (pouvant sensiblement être considéré comme une chambre pressurisée) pouvant servir à d'autres besoins en prélèvement d'air sur le turboréacteur 10. La pression dans le volume à haute pression 33 est celle d'un étage 12b du compresseur 12, situé en aval de l'étage 12a au niveau duquel se fait le prélèvement d'air chaud.

Le tube de prélèvement 32 est prévu pour être raccordé à une canalisation du circuit de prélèvement d'air chaud pressurisé qui circule à l'intérieur du bras de servitudes 23, comme représenté par le chemin fléché P sur la figure 1, de sorte à relier le compartiment de coeur ZC au compartiment de soufflante ZF. Puis, une fois au sein du compartiment de soufflante ZF, le circuit de prélèvement d'air chaud sous pression prévoit une sur-longueur de canalisation, comme la schématise la boucle du chemin fléché P sur la figure 1, qui permet d'augmenter la surface d'échange thermique entre le circuit de prélèvement en air chaud et l'air ambiant du compartiment de soufflante ZF pour refroidir l'air pressurisé avant la connexion du circuit de prélèvement en air chaud pressurisé à un pylône qui relie le turboréacteur 10 à la structure de l'avion.

Pour les besoins de l'illustration, la boucle du chemin fléché P est représentée par-dessus la veine secondaire, mais il faut comprendre que cette boucle reste cantonnée dans le compartiment de soufflante ZF. En outre, la boucle n'est pas représentée en intégralité ; les pointillés qui terminent le chemin fléché P signifient que la boucle continue sur un trajet qui n'est pas représenté et qui aboutit à un point de sortie où le circuit de refroidissement sort du compartiment de soufflante ZF pour alimenter l'aéronef en air sous pression.

On a représenté sur les figures 2A et 2B des vues agrandies et partielles de la figure 1 au niveau du compresseur 12, et notamment au niveau d'une paire d'étages successifs 12a et 12b du compresseur 12 entourés par un volume à haute pression 33 qui communique avec l'étage aval 12b par un port de prélèvement aval 31. Par exemple, la paire d'étages successifs correspond aux troisième et quatrième étages du compresseur. Les figures 2A et 2B correspondent respectivement à une situation où le circuit de prélèvement d'air chaud sous pression est en fonctionnement nominal et à une situation où ce circuit est mis accidentellement en communication avec le volume à haute pression 33 à cause d'une rupture du tube de prélèvement 32.

Le compresseur 12, qui alimente en air chaud de pressurisation le réservoir de carburant, comporte un port de prélèvement amont 30 d'air chaud sous pression, associé à l'étage amont 12a de la paire d'étages du compresseur 12, et le port de prélèvement aval 31 susmentionné d'air chaud sous pression, associé à l'étage aval 12b du compresseur 12 et situé en aval du port de prélèvement amont 30. La température de l'air chaud prélevé au niveau du port de prélèvement amont 30 est par exemple inférieure à 300°C, celle de l'air chaud prélevé au niveau du port de prélèvement aval 31 étant par exemple inférieure à 400°C. De plus, le port de prélèvement amont 30 est par exemple situé au deuxième étage 12a du compresseur 12, et le port de prélèvement aval 31 est par exemple situé au quatrième étage 12b du compresseur 12.

L'air chaud sous pression, prélevé à partir du compresseur 12 peut être utilisé pour au moins deux types d'alimentation en air de pressurisation, et notamment pour l'alimentation du réservoir de carburant par l'intermédiaire du port de prélèvement amont 30 de l'étage 12a du compresseur 12, et pour une autre alimentation en air chaud telle qu'une alimentation en air de dégivrage et/ou en air de pressurisation de cabine par l'intermédiaire du port de prélèvement aval 31 de l'étage 12b du compresseur 12.

Pour ce faire, il est ainsi prévu un tube de prélèvement 32 d'air chaud pressurisé, raccordé au port de prélèvement amont 30, et un volume à haute pression 33 raccordé au port de prélèvement aval 31, le tube de prélèvement 32 traversant le volume à haute pression 33 le long d'une portion de tube 32a. Le tube de prélèvement 32 achemine de l'air de pressurisation pour le réservoir selon la flèche 34. De même, le volume à haute pression 33 achemine de l'air de pressurisation pour un autre type d'alimentation (dégivrage ou pressurisation de cabine, par exemple) selon la flèche 35, par l'intermédiaire d'un conduit fluidique 36.

Néanmoins, un cas de dégradation majeur identifié concernant ce circuit de prélèvement en air chaud pressurisé du compresseur 12 est lié à la rupture du tube de prélèvement 32, ayant pour conséquence de pressuriser le réservoir de carburant avec de l'air trop chaud provenant de l'étage aval 12b du compresseur 12, pouvant engendrer ainsi des risques d'auto-inflammation du carburant.

En effet, en référence à la figure 2A qui représente une configuration de régime de fonctionnement nominal du circuit de prélèvement en air chaud du compresseur 12, l'air situé dans le volume à haute pression 33 ne se mélange pas avec celui qui provient du port de prélèvement amont 30 et qui est contenu dans le tube de prélèvement 32. L'air chaud sous pression qui traverse le tube de prélèvement 32 n'est donc quasiment pas réchauffé par l'air plus chaud du volume à haute pression 33.

En revanche, en référence à la figure 2B qui représente une configuration de dégradation du circuit de prélèvement en air chaud du compresseur 12, le tube de prélèvement 12 est endommagé par rupture au niveau de la portion 32a à proximité du volume à haute pression 33. Dans ce cas, un mélange se produit entre l'air contenu dans le volume à haute pression 33 et l'air moins chaud qui traverse le tube de prélèvement 32 en provenance du port de prélèvement amont 30 de l'étage amont 12a du compresseur 12. De cette façon, de l'air trop chaud sortant de l'étage aval 12b du compresseur 12 selon la flèche 37 est amené aux réservoirs de carburant par le circuit de prélèvement d'air chaud pressurisé représenté par le chemin fléché P sur la figure 1. Cet air trop chaud engendre des risques d'auto-inflammation du carburant dans les réservoirs. A titre d'exemple, il peut être imposé une température de 232°C à ne pas dépasser concernant l'air chaud envoyé par le circuit de prélèvement à l'entrée du pylône qui relie le turboréacteur à la structure de l'avion.

Il existe donc un besoin pour prévoir un système de protection au niveau du circuit de prélèvement en air chaud sous pression du compresseur 12, pour éviter que de l'air trop chaud soit injecté dans les réservoirs de carburant pour leur pressurisation.

Des solutions ont été conçues par la demanderesse sur la base notamment de l'utilisation de capteurs ou de vannes de contrôle, mais elles ne s'avèrent pas entièrement satisfaisantes et comportent plusieurs inconvénients. En particulier, de telles solutions peuvent présenter des difficultés en termes de faisabilité technique, un coût élevé ou encore des complications pour leur mise en oeuvre.

### EXPOSÉ DE L'INVENTION

Par conséquent, il existe un besoin pour proposer une solution alternative pour empêcher, ou au moins limiter, la pénétration d'air sous pression trop chaud, par exemple contenu dans un volume à haute pression, à l'intérieur d'un tube de prélèvement d'air de pressurisation d'une partie d'une turbomachine d'aéronef, par exemple d'un étage de compresseur de turbomachine, cet air de pressurisation étant destiné par exemple à alimenter un réservoir de carburant. Un tel besoin existe tout particulièrement dans le cas où le tube de prélèvement subit des dommages, et en particulier une rupture.

Autrement dit encore, il existe un besoin pour permettre d'empêcher, ou au moins de limiter, l'augmentation de température dans un réservoir de carburant alimenté en air chaud sous pression par l'intermédiaire d'un tel tube de prélèvement, en cas de dommages du tube de prélèvement, et en particulier en cas de rupture.

Il existe en outre un besoin pour prévoir une telle solution qui soit simple de mise en oeuvre, et pour laquelle l'augmentation en poids et en encombrement est minimisée.

L'invention a pour but de remédier au moins partiellement aux besoins mentionnés ci-dessus et aux inconvénients relatifs aux conceptions antérieures de la demanderesse.

L'invention a ainsi pour objet, selon l'un de ses aspects, un système d'alimentation en air sous pression pour une turbomachine d'aéronef, selon la revendication 1, qui est configuré pour alimenter en air de pressurisation une partie d'utilisation d'air comprimé de l'aéronef à partir d'air de pressurisation prélevé depuis une partie de prélèvement d'air comprimé de la turbomachine d'aéronef, caractérisé en ce qu'il comporte :
- un port de prélèvement d'air de pressurisation formé sur un carter de la partie de prélèvement d'air comprimé de la turbomachine d'aéronef,
- un organe de prélèvement raccordé au port de prélèvement pour permettre le prélèvement et l'acheminement de l'air de pressurisation prélevé vers la partie d'utilisation d'air comprimé,
- un port de passage de l'organe de prélèvement formé sur un carter d'un compartiment de la turbomachine, ledit carter étant sujet à des déplacements faibles relativement au carter de la partie de prélèvement d'air comprimé, l'organe de prélèvement traversant le port de passage avec une liberté de mouvement relativement à ce dernier au cours desdits déplacements faibles,
- un volume à haute pression traversé par l'organe de prélèvement, situé entre le carter de la partie de prélèvement d'air comprimé et le carter du compartiment de la turbomachine, et comportant de l'air sous une pression supérieure à celle de l'air de pressurisation prélevé,
le système d'alimentation en air sous pression comportant en outre des moyens d'étanchéité situés sensiblement entre le carter de la partie de prélèvement d'air comprimé et le carter du compartiment pour former une séparation sensiblement étanche entre le volume à haute pression et un espace libre communicant avec le compartiment et ménagé autour de l'organe de prélèvement, afin de se prémunir de l'introduction d'air sous pression du volume à haute pression à l'intérieur de l'organe de prélèvement en cas de rupture de ce dernier.

Grâce à l'invention, il est possible de permettre l'alimentation en air de pressurisation d'une partie d'un aéronef, par exemple d'un réservoir de carburant d'aéronef, par l'intermédiaire d'un organe de prélèvement d'air sous pression, par exemple d'un étage de compresseur de turbomachine, sans risque d'introduction d'air de pressurisation à une température trop élevée pouvant engendrer notamment des risques d'auto-inflammation du carburant, même en cas de rupture de l'organe de prélèvement. En outre, l'invention peut permettre d'apporter une solution simple et compacte pour la protection de l'organe de prélèvement d'air chaud sous pression, compatible avec les environnements dans lesquels elle peut être mise en place.

Le système d'alimentation en air sous pression selon l'invention peut en outre comporter l'une ou plusieurs des caractéristiques suivantes prises isolément ou suivant toutes combinaisons techniques possibles.

L'organe de prélèvement est avantageusement constitué par un tube de prélèvement. De même, l'organe de protection, décrit par la suite, est avantageusement constitué par un tube de protection. Ainsi, l'organe de prélèvement peut constituer un tube intérieur, situé à l'intérieur du tube de protection pouvant quant à lui constituer un tube extérieur. En particulier, le tube de protection peut constituer un contre-écrou pour la fixation du tube de prélèvement sur le port de prélèvement d'air de pressurisation.

Le système d'alimentation peut comporter un dispositif d'alimentation en air sous pression d'au moins un réservoir de carburant de l'aéronef auquel l'organe de prélèvement est raccordé.

La partie de prélèvement d'air comprimé de la turbomachine d'aéronef peut être constituée par un étage de compresseur de la turbomachine, notamment un compresseur haute pression. En particulier, l'organe de prélèvement peut être raccordé à un port de prélèvement d'un étage amont du compresseur de la turbomachine, et le volume à haute pression peut avoir la pression d'un étage aval du compresseur, plus élevée que celle de l'étage amont du compresseur.

L'organe de prélèvement peut être raccordé à une canalisation d'air chaud sous pression située à l'intérieur d'un bras de servitudes de la turbomachine, reliant le compartiment de coeur au compartiment de soufflante de la turbomachine.

Les moyens d'étanchéité peuvent comporter une première pièce d'étanchéité disposée autour de l'organe de prélèvement et dans le port de passage en possédant une liberté de mouvement relativement à ce dernier, cette première pièce d'étanchéité étant reliée au carter de la partie de prélèvement d'air comprimé par un raccordement étanche de façon à empêcher une fuite d'air significative depuis le volume à haute pression au niveau dudit raccordement.

Par ailleurs, le raccordement étanche peut être formé par une deuxième pièce d'étanchéité comprenant une surface extérieure annulaire formant une portion de surface sphérique, et la première pièce d'étanchéité peut présenter une extrémité libre comprenant une surface intérieure cylindrique qui forme une ligne de contact circulaire avec ladite portion de surface sphérique, de façon à ce que la première pièce d'étanchéité soit articulée avec étanchéité sur la deuxième pièce d'étanchéité.

En variante, il peut être possible de se passer d'une telle deuxième pièce d'étanchéité comprenant une surface extérieure annulaire formant une portion de surface sphérique. En particulier, il peut être possible de former une portion de surface sphérique sur la surface périphérique du bossage, décrit par la suite, formant le port de prélèvement.

Le système peut en outre comporter un capot de maintien fixé sur le carter du compartiment de la turbomachine et traversé par l'organe de prélèvement, ce capot de maintien étant agencé pour relier de façon étanche le carter et les moyens d'étanchéité tout en permettant une liberté de mouvement des moyens d'étanchéité relativement au carter.

La première pièce d'étanchéité peut comporter une semelle de traversée coulissante présentant une portion plane apte à venir en appui contre une portion plane correspondante du capot de maintien avec possibilité de glisser sur celle-ci, la liberté de mouvement de la première pièce d'étanchéité s'effectuant dans un plan parallèle à la portion plane avec empêchement de déplacement perpendiculairement à ce plan.

Le port de prélèvement peut être formé par un bossage sur le carter de la partie de prélèvement d'air comprimé, dont une surface interne est formée par un alésage taraudé configuré pour coopérer avec un filetage de la surface externe d'une première extrémité de l'organe de prélèvement pour permettre la fixation de l'organe de prélèvement sur le bossage du port de prélèvement.

La deuxième pièce d'étanchéité peut par ailleurs être une rondelle d'étanchéité sensiblement annulaire. Elle peut être montée sur le bossage du carter de la partie de prélèvement d'air comprimé, et peut comporter une ouverture de passage pour l'insertion de l'organe de prélèvement.

Le système d'alimentation peut en outre comporter un joint de serrage placé entre l'organe de prélèvement, notamment un premier bossage externe de l'organe de prélèvement, et la deuxième pièce d'étanchéité.

Un tel joint de serrage peut notamment être constitué par une rondelle élastique sensiblement annulaire, avec ou sans frein. Par exemple, il peut être choisi parmi les rondelles du type « Belleville » ou du type « Grower » à dents.

L'organe de prélèvement peut également comporter un deuxième bossage externe, situé à distance du premier bossage externe, de sorte que la portion de l'organe de prélèvement située entre les premier et deuxième bossages externes constitue une zone faible mécaniquement, c'est-à-dire une zone de fragilité mécanique, privilégiée en cas de rupture (i.e. de cassure) de l'organe de prélèvement.

Le deuxième bossage externe de l'organe de prélèvement peut également permettre de limiter (ou de calibrer) un débit d'air de pressurisation en cas de fuite, par exemple en cas de rupture de l'organe de prélèvement et/ou de la première pièce d'étanchéité. Dans ce cas, le deuxième bossage externe peut être formé sur l'organe de prélèvement sensiblement en regard d'un bossage externe de l'extrémité de la première pièce d'étanchéité à partir de laquelle s'étend la semelle de traversée coulissante. Le deuxième bossage externe de l'organe de prélèvement et le bossage externe de la première pièce d'étanchéité peuvent ainsi définir entre eux un canal restreint d'écoulement d'un débit d'air de pressurisation en cas de fuite.

Un organe de protection formant une enveloppe au moins partielle autour de l'organe de prélèvement peut être situé entre l'organe de prélèvement et la première pièce d'étanchéité, et peut comporter une cavité d'insertion pour l'introduction au moins partielle de l'organe de prélèvement à l'intérieur de l'organe de protection, ledit organe de protection étant agencé pour venir en appui contre la deuxième pièce d'étanchéité une fois l'organe de prélèvement fixé sur le bossage du port de prélèvement.

L'organe de protection peut comporter une première extrémité montée sur la première extrémité de l'organe de prélèvement, la première extrémité de l'organe de protection comportant notamment une portion taraudée destinée à coopérer avec un filetage de la surface externe de la première extrémité de l'organe de prélèvement. L'organe de protection peut de plus comporter une deuxième extrémité libre située à distance de l'organe de prélèvement et de la première pièce d'étanchéité.

L'intégrité de l'organe de protection peut être garantie par le fait que l'organe de protection comporte une deuxième extrémité libre, sans contact avec les éléments de son environnement, la première pièce d'étanchéité étant en appui contre la deuxième pièce d'étanchéité et non contre l'organe de protection. De ce fait, l'organe de protection ne subit aucune contrainte et ne peut donc jamais se casser. En particulier, l'organe de protection peut être agencé dans le système d'alimentation de façon à assurer un jeu entre la deuxième extrémité de l'organe de protection et l'organe de prélèvement, cette deuxième extrémité étant ainsi libre de toute sollicitation mécanique.

De façon avantageuse, le filetage de la surface externe de la première extrémité de l'organe de prélèvement, l'alésage taraudé de la surface interne du bossage du carter de la partie de prélèvement d'air comprimé, et la portion taraudée de la première extrémité de l'organe de protection, ne constituent pas des zones faibles mécaniquement du système d'alimentation de sorte qu'ils ne peuvent pas se casser car ils se tiennent les uns aux autres. Aussi, même en cas de rupture de l'organe de prélèvement et/ou de l'organe de protection, l'assemblage entre le filetage, l'alésage taraudé et la portion taraudée sera maintenu.

Par ailleurs, la première extrémité de l'organe de protection peut être en appui sur la deuxième pièce d'étanchéité et vissée sur la première extrémité de l'organe de prélèvement de façon à constituer un contre-écrou pour la fixation de l'organe de prélèvement sur le bossage du port de prélèvement.

Enfin, l'invention a aussi pour objet, selon un autre de ses aspects, un procédé d'assemblage, selon la revendication 11, d'un système d'alimentation en air sous pression tel que défini précédemment, comportant les étapes successives consistant à :
a) positionner la deuxième pièce d'étanchéité en appui sur le bossage du carter de la partie de prélèvement d'air comprimé,
b) placer la première pièce d'étanchéité en prise étanche avec la deuxième pièce d'étanchéité,
c) fixer l'organe de protection sur l'organe de prélèvement, notamment par vissage de la portion taraudée de l'organe de protection sur le filetage de la surface externe de la première extrémité de l'organe de prélèvement,
d) fixer l'ensemble formé par l'organe de protection et l'organe de prélèvement sur le port de prélèvement, notamment par vissage du filetage de la surface externe de la première extrémité de l'organe de prélèvement dans l'alésage taraudé de la surface interne du bossage, jusqu'à ce que l'organe de protection entre en contact avec la deuxième pièce d'étanchéité,
e) éventuellement, serrer de nouveau l'organe de protection sur l'organe de prélèvement afin de solidariser l'ensemble.

Ainsi, de façon avantageuse, la fixation de l'organe de protection sur la turbomachine est réalisée par le biais de l'organe de prélèvement, sur lequel l'organe de protection a été au préalable déjà fixé. Il pourrait être envisagé de disposer d'un outillage spécifique permettant la fixation simultanée des organes de protection et de prélèvement.

Le système d'alimentation en air sous pression et le procédé d'assemblage selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 illustre, en semi-coupe axiale, un exemple de turboréacteur d'aéronef sur lequel est prévu un prélèvement d'air chaud sous pression depuis un étage de compresseur,
- les figures 2A et 2B sont des vues agrandies et partielles du turboréacteur de la figure 1 au niveau du compresseur, respectivement lorsque le circuit de prélèvement d'air chaud sous pression est en fonctionnement nominal et en cas de dégradation de ce circuit,
- la figure 3 représente, en coupe axiale et partielle, un premier exemple de réalisation d'un système d'alimentation en air sous pression conforme à l'invention,
- les figures 4A, 4B, 4C et 4D illustrent, selon des vues partielles en coupe axiale, quatre étapes du procédé d'assemblage du système d'alimentation en air sous pression de la figure 3,
- la figure 5 représente, en coupe axiale et partielle, un deuxième exemple de réalisation d'un système d'alimentation en air sous pression conforme à l'invention, et
- la figure 6 représente, en coupe axiale et partielle, une variante de réalisation de l'exemple de la figure 5.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans toute la description, il est noté que les termes amont et aval sont à considérer par rapport à une direction principale F d'écoulement normal des gaz (de l'amont vers l'aval) pour une turbomachine 10. Par ailleurs, on appelle axe T de la turbomachine 10, l'axe de symétrie radiale de la turbomachine 10. La direction axiale de la turbomachine 10 correspond à l'axe de rotation des turbines, qui est aussi la direction de l'axe T de la turbomachine 10. Une direction radiale de la turbomachine 10 est une direction perpendiculaire à l'axe T de la turbomachine 10. En outre, sauf précision contraire, les adjectifs et adverbes axial, radial, axialement et radialement sont utilisés en référence aux directions axiale et radiale précitées. De plus, sauf précision contraire, les termes intérieur et extérieur sont utilisés en référence à une direction radiale de sorte que la partie intérieure d'un élément est plus proche de l'axe T de la turbomachine 10 que la partie extérieure du même élément.

Les figures 1, 2A et 2B ont déjà été décrites précédemment dans la partie relative au contexte technique de l'invention.

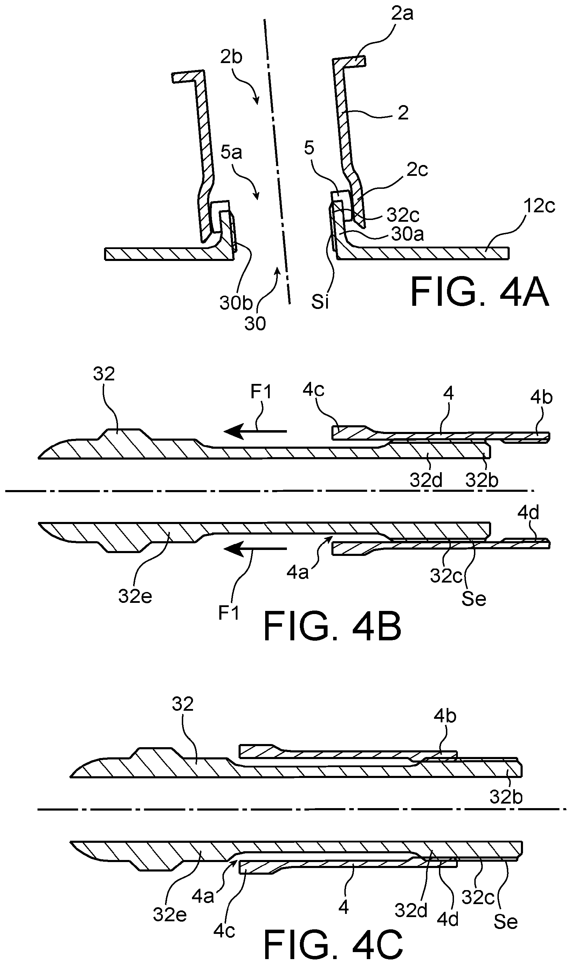

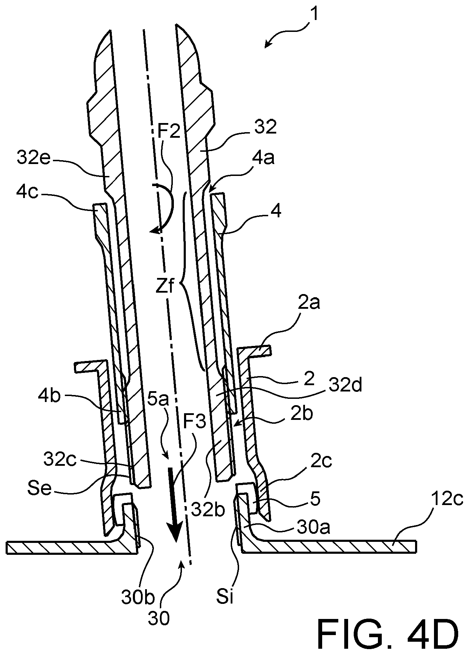

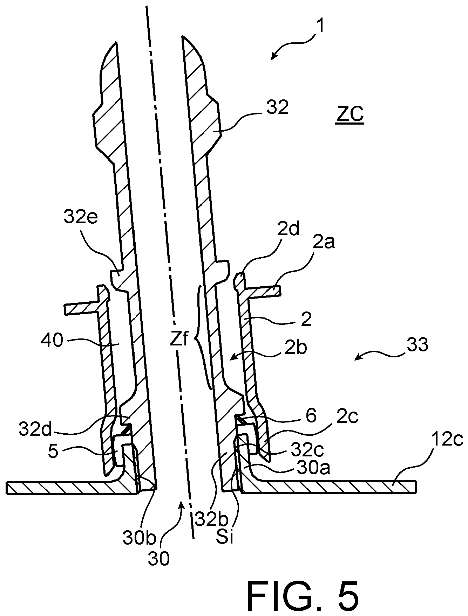

En référence aux figures 3 et 5, on a représenté respectivement, en coupe axiale et partielle, des premier et deuxième exemples de réalisation de systèmes 1 d'alimentation en air sous pression conformes à l'invention. Les figures 4A, 4B, 4C et 4D illustrent quant à elles, selon des vues partielles en coupe axiale, quatre étapes du procédé d'assemblage du système d'alimentation en air sous pression de la figure 3.

Dans tous ces exemples, on considère que la turbomachine 10 d'aéronef peut être telle que celle décrite précédemment en référence à la figure 1, de sorte que les éléments décrits en référence à la figure 1 ne sont pas repris dans la présente description détaillée. Toutefois, la turbomachine 10 pourrait être de tout type, et notamment correspondre à un turboréacteur double corps et double flux.

Par ailleurs, pour chacun des exemples de réalisation décrits ci-après, on considère que l'air chaud sous pression qui circule dans le système 1 d'alimentation selon l'invention est destiné à alimenter au moins un réservoir de carburant de l'aéronef, afin de le pressuriser et d'éviter ainsi des risques d'auto-inflammation du carburant.

De plus, on considère que le système 1 d'alimentation comporte un tube de prélèvement 32 d'air chaud sous pression depuis un étage amont 12a d'un compresseur 12, notamment un compresseur haute pression, de la turbomachine 10, comme il a été décrit précédemment en référence à la figure 1. Le tube de prélèvement 32 traverse un volume à haute pression 33 dont la pression est celle d'un étage aval 12b du compresseur 12 de plus haute pression que l'étage amont 12a du compresseur 12. Aussi, les moyens d'étanchéité du système 1 d'alimentation décrits par la suite ont notamment pour objectif de pallier à un cas de panne résultant d'une rupture de ce tube de prélèvement 32.

Bien entendu, ces choix ne sont nullement limitatifs. En particulier, le système 1 d'alimentation pourrait être prévu pour permettre le prélèvement d'air sous pression sur une autre partie de la turbomachine 10, et pourrait également permettre d'alimenter une autre partie de l'aéronef qu'un réservoir de carburant, et par exemple servir pour des opérations de dégivrage des ailes, ou encore pour des besoins de climatisation, par exemple de la cabine de l'aéronef durant une phase d'ascension.

Sur la figure 3, on a représenté partiellement un premier exemple de réalisation d'un système 1 d'alimentation en air sous pression conforme à l'invention.

Le système 1 comporte ainsi tout d'abord un port de prélèvement 30 d'air de pressurisation formé sur le carter 12c du compresseur 12.

Un tube de prélèvement 32 (tube intérieur) est par ailleurs raccordé au port de prélèvement 30 pour permettre le prélèvement et l'acheminement de l'air de pressurisation de l'étage amont 12a du compresseur 12 vers le réservoir de carburant de l'aéronef.

De plus, le système 1 d'alimentation en air sous pression comporte un port de passage 38 du tube de prélèvement 32. Le port de passage 38 est formé sur le carter 39 du compartiment de coeur ZC de la turbomachine 10, ce carter 39 étant sujet à des déplacements faibles relativement au carter 12c du compresseur 12. Par l'expression « déplacements faibles », on entend notamment un déplacement relatif du carter 39 du compartiment de coeur ZC par rapport au carter 12c du compresseur 12, causé par les dilatations et les contraintes mécaniques auxquelles sont soumis les carters. Par exemple, le carter 12c du compresseur 12 peut être soumis à des températures plus élevées que le carter 39 du compartiment de coeur ZC. De plus, pendant le fonctionnement de la turbomachine 10, les efforts de poussée et de couple générés par la turbine provoquent des déformations temporaires de chaque carter qui impliquent des faibles déplacements relatifs entre les carters. Du fait de ces déplacements relatifs, le port de prélèvement 30 et le port de passage 38, qui s'étendent sensiblement selon un même axe correspondant à l'axe du tube de prélèvement 32, peuvent se trouver légèrement désalignés en fonctionnement. La distance entre les deux ports 30 et 38, ainsi que l'angle entre les deux carters 12c et 39, peuvent également varier faiblement. Pour ces raisons, il est souhaité que le tube de prélèvement 32, qui est fixé au port de prélèvement 30 du carter 12c et suit donc le déplacement de ce port 30, traverse le port de passage 38 avec une liberté de mouvement relativement à ce dernier de façon à ne pas venir en contact avec le carter 39 au cours desdits déplacements faibles. Une mise en appui du tube de prélèvement 32 sur le carter 39 génèrerait en effet des contraintes sur le tube qui risqueraient de provoquer sa rupture.

En outre, le tube de prélèvement 32 traverse un volume à haute pression 33 le long d'une portion 32a de tube de prélèvement, le volume à haute pression 33 étant situé entre le carter 12c du compresseur 12 et le carter 39 du compartiment de coeur ZC.

Le volume à haute pression 33 comporte de l'air sous une pression supérieure à celle de l'air de pressurisation prélevé depuis l'étage amont 12a du compresseur 12.

Conformément à l'invention, le système 1 d'alimentation en air sous pression comporte avantageusement des moyens d'étanchéité 2 situés sensiblement entre le carter 12c du compresseur 12 et le carter 39 du compartiment de coeur ZC pour former une séparation sensiblement étanche entre le volume à haute pression 33 et un espace libre 40 communicant avec le compartiment de coeur ZC et ménagé autour du tube de prélèvement 32, cet espace libre 40 longeant une zone faible mécaniquement Zf du tube de prélèvement 32, de sorte à se prémunir de l'introduction d'air sous pression du volume à haute pression 33 à l'intérieur du tube de prélèvement 32 en cas de rupture de celui-ci.

En outre, une première pièce d'étanchéité sous la forme d'une traversée coulissante 2 (encore appelée parfois « yoyo ») est disposée autour du tube de prélèvement 32 et dans le port de passage 38 en possédant une liberté de mouvement relativement à ce dernier. Cette traversée coulissante 2 est reliée au carter 12c du compresseur 12 par un raccordement étanche de façon à empêcher une fuite d'air significative depuis le volume à haute pression 33 au niveau du raccordement.

Ce raccordement étanche est formé par une deuxième pièce d'étanchéité 5, qui comporte une ouverture de passage 5a pour le passage du tube de prélèvement 32. Cette deuxième pièce d'étanchéité 5 se présente sous la forme d'une rondelle d'étanchéité, comprenant une surface extérieure annulaire formant une portion de surface sphérique. La traversée coulissante 2 présente une extrémité libre 2c comprenant une surface intérieure cylindrique qui forme une ligne de contact circulaire avec cette portion de surface sphérique, de façon à ce que la traversée coulissante 2 soit articulée avec étanchéité sur la rondelle d'étanchéité 5. L'articulation de la traversée coulissante 2 sur la deuxième pièce d'étanchéité 5 permet de ne pas générer de contraintes sur ces pièces lors des déplacements relatifs du carter 39 du compartiment de coeur ZC par rapport au carter 12c du compresseur 12, en particulier lorsque l'angle et/ou la distance entre les deux carters sont amenés à varier. En effet, la traversée coulissante 2 est prévue pour coulisser, c'est-à-dire glisser localement, sur une surface solidaire du carter 39, tout en restant perpendiculaire à cette surface.

Par ailleurs, le système 1 comporte de plus un capot de maintien 3 fixé sur le carter 39 du compartiment de coeur ZC de la turbomachine 10 et traversé par le tube de prélèvement 32, ce capot de maintien 3 étant agencé pour relier de façon étanche le carter 39 et la traversée coulissante 2 tout en permettant une liberté de mouvement de la traversée coulissante 2 relativement au carter 39. Le capot de maintien 3 comporte un deuxième orifice de passage 3a pour l'insertion du tube de prélèvement 32.

La traversée coulissante 2 comporte de plus une semelle de traversée coulissante 2a qui présente une portion plane apte à venir en appui contre une portion plane correspondante du capot de maintien 3 avec possibilité de glisser sur celle-ci. La liberté de mouvement de la traversée coulissante 2 s'effectue dans un plan parallèle à la portion plane avec empêchement de déplacement perpendiculairement à ce plan. Ainsi, la semelle de traversée coulissante 2a est disposée contre le carter 39 du compartiment de coeur ZC et un premier orifice de passage 2b pour l'insertion du tube de prélèvement 32.

La traversée coulissante 2 est montée de façon relativement mobile entre le tube de prélèvement 32 et le carter 39 du compartiment de coeur ZC de la turbomachine 10. En particulier, elle est montée de façon à venir en appui contre le capot de maintien 3 avec possibilité de coulisser sur ce dernier. De plus, un jeu J est ménagé entre la semelle de traversée coulissante 2a et un épaulement annulaire intérieur du capot de maintien 3 en appui sur le carter 39. Le capot de maintien 3 permet donc un maintien axial de la traversée coulissante 2 par rapport au carter 39. Néanmoins, un petit jeu non représenté sur la figure 3 est prévu entre la surface extérieure du carter 39 et la semelle de traversée coulissante 2a, de façon à éviter un serrage de cette semelle 2a entre le capot de maintien 3 et le carter 39. En effet, la pression dans le volume à haute pression 33 est supérieure à celle dans le compartiment de coeur ZC et donc pousse la traversée coulissante 2 vers l'extérieur, ce qui a pour effet de plaquer la semelle 2a contre le capot de maintien 3. Il n'y a alors plus de contact entre la semelle 2a et le carter 39.

Le port de prélèvement 30 est formé par un bossage 30a du carter 12c, ce bossage présentant une ouverture traversant le carter 12c et s'étendant selon un axe de port qui correspond à l'axe du tube de prélèvement 32. La surface interne Si qui définit l'ouverture du bossage est formée par un alésage taraudé 30b coopérant avec un pas de vis 32c de la surface externe Se de la première extrémité 32b du tube de prélèvement 32. De cette façon, la fixation du tube de prélèvement 32 sur le bossage 30a est rendue possible par vissage du pas de vis 32c dans l'alésage taraudée 30b.

La rondelle d'étanchéité 5 est montée sur le bossage 30a du carter 12c du compresseur 12.

De plus, dans ce premier exemple de la figure 3, les moyens d'étanchéité comportent également un tube de protection 4 (tube extérieur) formant une enveloppe partielle autour du tube de prélèvement 32.

Le tube de protection 4 est situé entre le tube de prélèvement 32 et la traversée coulissante 2. Il comporte une cavité d'insertion 4a pour l'introduction partielle du tube de prélèvement 32 à l'intérieur de celui-ci.

Par ailleurs, comme on peut le voir sur cette figure 3 et sur les figures 4B à 4D, le tube de protection 4 comporte une première extrémité 4b fixée à la première extrémité 32b du tube de prélèvement 32.

Cette première extrémité 4b du tube de protection 4 comporte une portion taraudée 4d (contre-écrou) coopérant avec le filetage 32c de la surface externe Se de la première extrémité 32b du tube de prélèvement 32.

De plus, le tube de protection 4 est situé à distance radialement de la traversée coulissante 2, et comporte une deuxième extrémité 4c libre située à distance radialement du tube de prélèvement 32. Ainsi, lors des déplacements relatifs du carter 39 du compartiment de coeur ZC par rapport au carter 12c du compresseur 12, le tube de protection 4 est amené à ne plus être en alignement axial avec la traversée coulissante 2, mais ne vient normalement pas au contact de la traversée coulissante 2. De plus, même si le tube de prélèvement 32 subit des contraintes lui imposant une légère flexion, il ne vient normalement pas au contact de la deuxième extrémité 4c. L'intégrité du tube de protection 4 est ainsi garantie notamment par cette deuxième extrémité 4c libre. Le tube de protection 4 ne subit aucune contrainte et ne peut donc jamais se casser.

Par ailleurs, comme on peut le voir sur la figure 3, la première extrémité 4b du tube de protection 4 est en contact avec la rondelle d'étanchéité 5 de façon à assurer une certaine étanchéité au niveau de la surface de contact.

De façon avantageuse, si le tube intérieur de prélèvement 32 venait à rompre, l'air de pressurisation de fuite matérialisé par la flèche R1 s'échapperait ainsi vers le compartiment de coeur ZC. De même, si la traversée coulissante 2 venait à rompre, l'air de pressurisation de fuite matérialisé par la flèche R2 s'échapperait ainsi vers le compartiment de coeur ZC, mais en aucun cas vers le circuit de pressurisation du réservoir de carburant, c'est-à-dire à l'intérieur du tube de prélèvement 32.

On va maintenant décrire, en référence aux figures 4A à 4D, des étapes d'un procédé d'assemblage du système 1 d'alimentation en air sous pression du premier exemple de la figure 3.

Dans des première a) et deuxième b) étapes illustrées sur la figure 4A, on introduit respectivement la rondelle d'étanchéité 5 et la traversée coulissante 2 dans la turbomachine 10, en positionnant la rondelle d'étanchéité 5 sur le bossage 30a du carter 12c du compresseur 12, puis en plaçant la traversée coulissante 2 en prise étanche avec la rondelle d'étanchéité 5.

Par ailleurs, comme illustré sur la figure 4B, on visse le tube de protection 4 formant un contre-écrou sur le tube de prélèvement dans une étape c), en progressant selon les flèches F1 représentées sur la figure 4B, par coopération entre la portion taraudée 4d du tube de protection 4 sur le filetage 32c de la surface externe Se de la première extrémité 32b du tube de prélèvement 32.

Comme illustré sur la figure 4C, on obtient alors un ensemble formé par le tube de protection 4 et le tube de prélèvement 32, vissés l'un sur l'autre.

Ensuite, comme illustré sur la figure 4D, on introduit selon une étape d) cet ensemble dans la turbomachine 10, par vissage du filetage 32c du tube de prélèvement 32 dans l'alésage taraudé 30b de la surface interne Si du bossage 30a du port de prélèvement 30, en progressant selon la flèche F3 avec rotation selon la flèche F2. On procède ainsi jusqu'à ce que le tube de protection 4 entre en contact avec la rondelle d'étanchéité 5.

Enfin, dans une étape e), on serre de nouveau le tube de protection (4) formant un contre-écrou sur le tube de prélèvement 32 afin de solidariser l'ensemble.

Sur la figure 5, on a représenté partiellement un deuxième exemple de réalisation d'un système 1 d'alimentation en air sous pression conforme à l'invention.

Dans ce deuxième exemple, les éléments communs avec ceux décrits en référence à la figure 3 ne seront pas repris.

Ce deuxième exemple de réalisation diffère essentiellement du premier exemple de réalisation décrit en référence à la figure 3 en ce que les moyens pour fixer le tube de prélèvement 32 au port de prélèvement 30 d'air de pressurisation ne comportent pas ici de contre-écrou, ce qui permet de se passer du tube de protection 4.

En particulier, les moyens d'étanchéité sont formés par la rondelle d'étanchéité 5 et la traversée coulissante 2.

Toutefois, dans cet exemple, le système 1 d'alimentation comporte également un joint élastique de serrage 6 sensiblement annulaire, placé entre un premier bossage externe 32d du tube de prélèvement 32 et la rondelle d'étanchéité 5.

Ce joint de serrage 6 peut par exemple être choisi parmi les rondelles du type « Belleville » ou du type « Grower » à dents.

Par ailleurs, le tube de prélèvement 32 comporte également un deuxième bossage externe 32e, au voisinage de l'extrémité du tube 32 au niveau de laquelle le tube se raccorde dans le compartiment de coeur ZC à une canalisation (non représentée) du circuit de prélèvement d'air chaud pressurisé, représenté par le chemin fléché P sur la figure 1. Le raccordement du tube 32 à la canalisation dans le compartiment de coeur ZC engendre des contraintes sur le tube. De ce fait, on ne peut pas complètement exclure en fonctionnement un risque de rupture (i.e. de cassure) du tube 32. Le bossage externe 32e est situé à distance du premier bossage externe 32d, de sorte que la portion du tube de prélèvement 32 située entre les premier 32d et deuxième 32e bossages externes constitue une zone faible mécaniquement Zf, c'est-à-dire une zone de fragilité mécanique, privilégiée en cas de rupture du tube de prélèvement 32.

Ces premier 32d et deuxième 32e bossages sont également présents sur le tube de prélèvement 32 de l'exemple de réalisation de la figure 3. Ils permettent de définir la zone faible mécaniquement Zf au niveau de laquelle il pourrait se produire une cassure du tube de prélèvement 32 en cas de sollicitation mécanique anormalement intense.

Par ailleurs, le deuxième bossage externe 32e permet également de calibrer le débit d'air de pressurisation en cas de fuite, par exemple en cas de rupture du tube prélèvement 32 et/ou de la traversée coulissante 2. Pour ce faire, comme illustré sur la figure 5, ce deuxième bossage externe 32e est formé sur le tube de prélèvement 32 sensiblement en regard d'un bossage externe 2d de l'extrémité de la traversée coulissante 2 à partir de laquelle s'étend la semelle de traversée coulissante 2a. Ces deux bossages 32e et 2d définissent alors entre eux un canal restreint d'écoulement d'air de pressurisation en cas de fuite. Dans l'exemple de réalisation de la figure 3, un canal restreint analogue est formé entre le deuxième bossage 32e et l'extrémité libre 4c du tube de protection 4. La section de passage d'air de ce canal restreint peut être ajustée au montage en réglant la position du tube de protection 4 sur le tube de prélèvement 32, comme illustré sur la figure 4C.

De façon avantageuse, l'espace entourant la zone faible mécaniquement Zf du tube de prélèvement 32 n'est plus à la pression du volume à haute pression 33, mais à une pression inférieure à celle présente à l'intérieur du tube de prélèvement 32, à savoir la pression du compartiment de coeur ZC.

Si le tube de prélèvement 32 ou la traversée coulissante 2 venait à se casser, autrement dit à rompre, l'air sous pression de fuite s'échapperait alors vers le compartiment de coeur ZC, mais jamais dans le circuit de pressurisation du tube de prélèvement 32 vers le réservoir de carburant.

Ainsi, de façon avantageuse dans chacun des modes de réalisation décrits dans ce qui précède, les moyens d'étanchéité du système 1 d'alimentation en air sous pression selon l'invention permettent de s'assurer que l'air de pressurisation contenu dans le volume à haute pression 33 ne circulera pas à l'intérieur du tube de prélèvement 32 en direction du réservoir de carburant en cas de fuite. En conséquence, toute fuite ira se déverser dans le compartiment de coeur ZC, et non dans le circuit de pressurisation du réservoir de carburant.

De plus, la présence du tube de protection 4, comme selon l'exemple de la figure 3, ou la disposition particulière de la traversée coulissante 2 et de la pièce d'étanchéité 5, comme selon l'exemple de la figure 5, peuvent permettre de calibrer le débit d'air de pressurisation en cas de fuite, et donc de limiter les pertes de rendement du compresseur 12, et ainsi les pénalités de consommation spécifique de carburant (ou encore SFC pour « Specific Fuel Consumption » en anglais) en cas de défaillance du tube de prélèvement.

Bien entendu, l'invention n'est pas limitée aux exemples de réalisation qui viennent d'être décrits. Diverses modifications peuvent y être apportées par l'homme du métier.

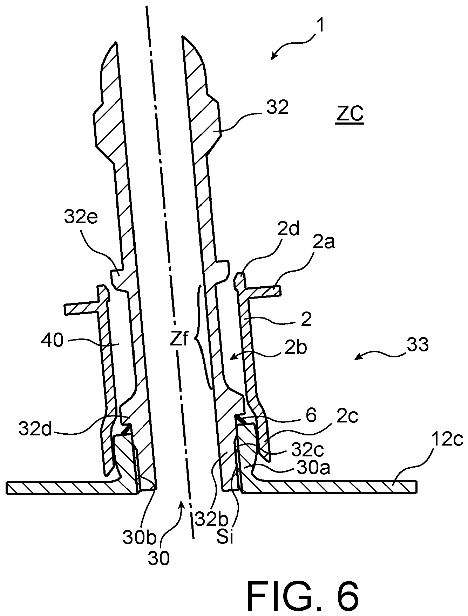

En particulier, dans les exemples précédemment décrits en référence aux figures 3, 4A, 4D et 5, la rondelle d'étanchéité 5 comporte une surface extérieure annulaire formant une portion de surface sphérique. Cette portion sphérique est comprise dans la surface d'une même sphère. Toutefois, selon une variante de réalisation de l'invention, par exemple selon une variante de réalisation de l'exemple de la figure 5 telle qu'illustrée sur la figure 6, il pourrait être possible de se passer d'une telle rondelle d'étanchéité 5 et de former une portion sphérique directement sur la surface périphérique du bossage 30a formant le port de prélèvement 30.

L'expression « comportant un » doit être comprise comme étant synonyme de « comportant au moins un », sauf si le contraire est spécifié.

## Revendications

1. Système (1) d'alimentation en air sous pression pour une turbomachine (10) d'aéronef, configuré pour alimenter en air de pressurisation une partie d'utilisation d'air comprimé de l'aéronef à partir d'air de pressurisation prélevé depuis une partie de prélèvement d'air comprimé (12) de la turbomachine (10) d'aéronef, **caractérisé en ce qu'**il comporte :
- un port de prélèvement (30) d'air de pressurisation formé sur un carter (12c) de la partie de prélèvement d'air comprimé (12) de la turbomachine (10) d'aéronef,
- un organe de prélèvement (32) raccordé au port de prélèvement (30) pour permettre le prélèvement et l'acheminement de l'air de pressurisation prélevé vers la partie d'utilisation d'air comprimé,
- un port de passage (38) de l'organe de prélèvement (32) formé sur un carter (39) d'un compartiment (ZC) de la turbomachine (10), ledit carter (39) étant sujet à des déplacements faibles relativement au carter (12c) de la partie de prélèvement d'air comprimé (12), l'organe de prélèvement (32) traversant le port de passage (38) avec une liberté de mouvement relativement à ce dernier au cours desdits déplacements faibles,
- un volume à haute pression (33) traversé par l'organe de prélèvement (32), situé entre le carter (12c) de la partie de prélèvement d'air comprimé (12) et le carter (39) du compartiment (ZC), et comportant de l'air sous une pression supérieure à celle de l'air de pressurisation prélevé,
le système (1) d'alimentation en air sous pression comportant en outre des moyens d'étanchéité (2) situés sensiblement entre le carter (12c) de la partie de prélèvement d'air comprimé (12) et le carter (39) du compartiment (ZC) pour former une séparation sensiblement étanche entre le volume à haute pression (33) et un espace libre (40) communicant avec le compartiment (ZC) et ménagé autour de l'organe de prélèvement (32), afin de se prémunir de l'introduction d'air sous pression du volume à haute pression (33) à l'intérieur de l'organe de prélèvement (32) en cas de rupture de ce dernier.

2. Système selon la revendication 1, **caractérisé en ce que** les moyens d'étanchéité comportent une première pièce d'étanchéité (2) disposée autour de l'organe de prélèvement (32) et dans le port de passage (38) en possédant une liberté de mouvement relativement à ce dernier, cette première pièce d'étanchéité (2) étant reliée au carter (12c) de la partie de prélèvement d'air comprimé (12) par un raccordement étanche de façon à empêcher une fuite d'air significative depuis le volume à haute pression (33) au niveau dudit raccordement.

3. Système selon la revendication 2, **caractérisé en ce que** le raccordement étanche est formé par une deuxième pièce d'étanchéité (5) comprenant une surface extérieure annulaire formant une portion de surface sphérique, et **en ce que** la première pièce d'étanchéité (2) présente une extrémité libre (2c) comprenant une surface intérieure cylindrique qui forme une ligne de contact circulaire avec ladite portion de surface sphérique, de façon à ce que la première pièce d'étanchéité (2) soit articulée avec étanchéité sur la deuxième pièce d'étanchéité (5).

4. Système selon l'une des revendications précédentes, **caractérisé en ce qu'**il comprend un capot de maintien (3) fixé sur le carter (39) du compartiment (ZC) de la turbomachine (10) et traversé par l'organe de prélèvement (32), ce capot de maintien (3) étant agencé pour relier de façon étanche le carter (39) et les moyens d'étanchéité (2) tout en permettant une liberté de mouvement des moyens d'étanchéité (2) relativement au carter (39).

5. Système selon la revendication 4, prise en combinaison avec la revendication 2 ou 3, **caractérisé en ce que** la première pièce d'étanchéité (2) comporte une semelle de traversée coulissante (2a) présentant une portion plane apte à venir en appui contre une portion plane correspondante du capot de maintien (3) avec possibilité de glisser sur celle-ci, la liberté de mouvement de la première pièce d'étanchéité (2) s'effectuant dans un plan parallèle à la portion plane avec empêchement de déplacement perpendiculairement à ce plan.

6. Système selon l'une quelconque des revendications précédentes, **caractérisé en ce que** le port de prélèvement (30) est formé par un bossage (30a) sur le carter (12c) de la partie de prélèvement d'air comprimé (12), dont une surface interne (Si) est formée par un alésage taraudé (30b) configuré pour coopérer avec un filetage (32c) de la surface externe (Se) d'une première extrémité (32b) de l'organe de prélèvement (32) pour permettre la fixation de l'organe de prélèvement (32) sur le bossage (30a) du port de prélèvement (30).

7. Système selon la revendication 6, en combinaison avec la revendication 3, **caractérisé en ce que** la deuxième pièce d'étanchéité (5) est montée sur le bossage (30a) du carter (12c) de la partie de prélèvement d'air comprimé (12) et comporte une ouverture de passage (5a) pour l'insertion de l'organe de prélèvement (32).

8. Système selon la revendication 6 ou 7, en combinaison avec la revendication 3, **caractérisé en ce qu'**un organe de protection (4) formant une enveloppe au moins partielle autour de l'organe de prélèvement (32) est situé entre l'organe de prélèvement (32) et la première pièce d'étanchéité (2) et comporte une cavité d'insertion (4a) pour l'introduction au moins partielle de l'organe de prélèvement (32) à l'intérieur de l'organe de protection (4), ledit organe de protection (4) étant agencé pour venir en appui contre la deuxième pièce d'étanchéité (5) une fois l'organe de prélèvement (32) fixé sur le bossage (30a) du port de prélèvement (32).

9. Système selon la revendication 8, **caractérisé en ce que** l'organe de protection (4) comporte une première extrémité (4b) montée sur la première extrémité (32b) de l'organe de prélèvement (32), la première extrémité (4b) de l'organe de protection (4) comportant notamment une portion taraudée (4d) destinée à coopérer avec un filetage (32c) de la surface externe (Se) de la première extrémité (32b) de l'organe de prélèvement (32), et **en ce que** l'organe de protection (4) comporte une deuxième extrémité (4c) libre située à distance de l'organe de prélèvement (32) et de la première pièce d'étanchéité (2).

10. Système selon la revendication 9, **caractérisé en ce que** la première extrémité (4b) de l'organe de protection (4) est en appui sur la deuxième pièce d'étanchéité (5) et est vissée sur la première extrémité (32b) de l'organe de prélèvement (32) de façon à constituer un contre-écrou pour la fixation de l'organe de prélèvement (32) sur le bossage (30a) du port de prélèvement (30).

11. Procédé d'assemblage d'un système (1) d'alimentation en air sous pression selon l'une quelconque des revendications 7 à 10, comportant les étapes successives consistant à :
a) positionner la deuxième pièce d'étanchéité (5) en appui sur le bossage (30a) du carter (12c) de la partie de prélèvement d'air comprimé (12),
b) placer la première pièce d'étanchéité (2) en prise étanche avec la deuxième pièce d'étanchéité (5),
c) fixer l'organe de protection (4) sur l'organe de prélèvement (32), notamment par vissage de la portion taraudée (4d) de l'organe de protection (4) sur le filetage (32c) de la surface externe (Se) de la première extrémité (32b) de l'organe de prélèvement (32),
d) fixer l'ensemble formé par l'organe de protection (4) et l'organe de prélèvement (32) sur le port de prélèvement (30), notamment par vissage du filetage (32c) de la surface externe (Se) de la première extrémité (32b) de l'organe de prélèvement (32) dans l'alésage taraudé (30b) de la surface interne (Si) du bossage (30a), jusqu'à ce que l'organe de protection (4) entre en contact avec la deuxième pièce d'étanchéité (5),
e) éventuellement, serrer de nouveau l'organe de protection (4) sur l'organe de prélèvement (32) afin de solidariser l'ensemble.

## Patentansprüche

1. System (1) zur Versorgung mit Druckluft für ein Flugzeug-Turbotriebwerk (10), das dazu konzipiert ist, einen Bereich des Flugzeugs, in dem Druckluft verwendet wird, mit Druckbelüftungsluft zu versorgen, und zwar aus Druckbelüftungsluft, die aus einem Druckluftentnahmebereich (12) des Turbotriebwerks (10) entnommen wird,
**dadurch gekennzeichnet,**
**dass** es aufweist:
- eine Entnahmeöffnung (30) für Druckbelüftungsluft, die an einem Gehäuse (12c) des Druckluftentnahmebereichs (12) des Flugzeug-Turbotriebwerks (10) gebildet ist,
- ein Entnahmeorgan (32), das an die Entnahmeöffnung (30) angeschlossen ist, um die Entnahme und das Führen der entnommenen Druckbelüftungsluft zu dem Bereich, in dem Druckluft verwendet wird, zu ermöglichen,
- eine Durchlassöffnung (38) des Entnahmeorgans (32), die an einem Gehäuse (39) eines abgeteilten Teils (ZC) des Turbotriebwerks (10) gebildet ist, wobei dieses Gehäuse (39) geringen Verschiebungen gegenüber dem Gehäuse (12c) des Druckluftentnahmebereichs (12) unterliegt, wobei das Entnahmeorgan (32) durch die Durchlassöffnung (38) hindurch mit einer Bewegungsfreiheit gegenüber letzterer während der genannten geringen Verschiebungen geführt ist,
- einen Hochdruckraum (33), durch den das Entnahmeorgan (32) geführt ist, der sich zwischen dem Gehäuse (12c) des Druckluftentnahmebereichs (12) und dem Gehäuse (39) des abgeteilten Teils (ZC) befindet und der Luft enthält, die unter einem höheren Druck steht als die entnommene Druckbelüftungsluft,
wobei das System (1) zur Versorgung mit Druckluft ferner Dichtungsmittel (2) aufweist, die sich im Wesentlichen zwischen dem Gehäuse (12c) des Druckluftentnahmebereichs (12) und dem Gehäuse (39) des abgeteilten Teils (ZC) befinden, um eine im Wesentlichen dichte Trennung zwischen dem Hochdruckraum (33) und einem freien Raum (40) zu schaffen, welcher mit dem abgeteilten Teil (ZC) kommuniziert und um das Entnahmeorgan (32) herum gebildet ist, um sich gegen das Einführen von Druckluft aus dem Hochdruckraum (33) in dem Entnahmeorgan (32) zu sichern, falls letzteres brechen sollte.

2. System nach Anspruch 1,
**dadurch gekennzeichnet,**
**dass** die Dichtungsmittel ein erstes Dichtungsstück (2) enthalten, das um das Entnahmeorgan (32) herum und in der Durchlassöffnung (38) angeordnet ist, wobei es eine Bewegungsfreiheit letzterer gegenüber besitzt, wobei dieses erste Dichtungsstück (2) mit dem Gehäuse (12c) des Druckluftentnahmebereichs (12) durch einen dichten Anschluss verbunden ist, so dass ein signifikanter Luftaustritt aus dem Hochdruckraum (33) im Bereich dieses Anschlusses verhindert wird.

3. System nach Anspruch 2,
**dadurch gekennzeichnet,**
**dass** der dichte Anschluss von einem zweiten Dichtungsstück (5) gebildet wird, das eine ringförmige Außenfläche aufweist, die einen Teil einer Kugeloberfläche bildet, und dass das erste Dichtungsstück (2) ein freies Ende (2c) aufweist, das eine zylindrische Innenfläche hat, die eine kreisförmige Kontaktlinie mit dem genannten Teil einer Kugeloberfläche bildet, so dass das erste Dichtungsstück (2) unter Dichtigkeit mit dem zweiten Dichtungsstück (5) gelenkig verbunden ist.

4. System nach einem der vorherigen Ansprüche,
**dadurch gekennzeichnet,**
**dass** es eine Haltekappe (3) enthält, die an dem Gehäuse (39) des abgeteilten Teils (ZC) des Turbotriebwerks (10) befestigt ist und durch die sich das Entnahmeorgan (32) erstreckt, wobei diese Haltekappe (3) so angeordnet ist, dass sie das Gehäuse (39) und die Dichtungsmittel (2) dicht verbindet und dabei zugleich eine Bewegungsfreiheit der Dichtungsmittel (2) gegenüber dem Gehäuse (39) ermöglicht.

5. System nach Anspruch 4 in Kombination mit Anspruch 2 oder 3,
**dadurch gekennzeichnet,**
**dass** das erste Dichtungsstück (2) einen gleitenden Durchführungsflansch (2a) umfasst, der einen ebenen Abschnitt aufweist, welcher geeignet ist, in Anlage an einem entsprechenden ebenen Abschnitt der Haltekappe (3) zu kommen, und zwar mit der Möglichkeit, auf diesem zu gleiten, wobei die Bewegungsfreiheit des ersten Dichtungsstücks (2) in einer zu dem ebenen Abschnitt parallelen Ebene und unter Verhinderung einer Verschiebung senkrecht zu dieser Ebene besteht.

6. System nach einem der vorherigen Ansprüche,
**dadurch gekennzeichnet,**
**dass** die Entnahmeöffnung (30) durch einen Wulst (30a) an dem Gehäuse (12c) des Druckluftentnahmebereichs (12) gebildet ist, dessen eine Innenfläche (Si) durch eine Gewindebohrung (30b) gebildet ist, die so geformt ist, dass sie mit einem Außengewinde (32c) der Außenfläche (Se) eines ersten Endes (32b) des Entnahmeorgans (32) zusammenwirkt, um die Befestigung des Entnahmeorgans (32) an dem Wulst (30a) der Entnahmeöffnung (30) zu ermöglichen.

7. System nach Anspruch 6,
**dadurch gekennzeichnet,**
**dass** das zweite Dichtungsstück (5) an dem Wulst (30a) des Gehäuses (12c) des Druckluftentnahmebereichs (12) angebracht ist und eine Durchlassöffnung (5a) für das Einsetzen des Entnahmeorgans (32) aufweist.

8. System nach Anspruch 6 oder 7 in Kombination mit Anspruch 3,
**dadurch gekennzeichnet,**
**dass** ein Schutzorgan (4), das mindestens teilweise eine Hülle um das Entnahmeorgan (32) herum bildet, sich zwischen dem Entnahmeorgan (32) und dem ersten Dichtungsstück (2) befindet und einen Einsatzhohlraum (4a) zum mindestens teilweise Einsetzen des Entnahmeorgans (32) ins Innere des Schutzorgans (4) aufweist, wobei dieses Schutzorgan (4) so angeordnet ist, dass es in Anlage an dem zweiten Dichtungsstück (5) kommt, sobald das Entnahmeorgan (32) an dem Wulst (30a) der Entnahmeöffnung (30) befestigt ist.

9. System nach Anspruch 8,
**dadurch gekennzeichnet,**
**dass** das Schutzorgan (4) ein erstes Ende (4b) aufweist, das an dem ersten Ende (32b) des Entnahmeorgans (32) angebracht ist, wobei das erste Ende (4b) des Schutzorgans (4) insbesondere einen Abschnitt mit Innengewinde (4d) aufweist, der dazu bestimmt ist, mit einem Außengewinde (32c) der Außenfläche (Se) des ersten Endes (32b) des Entnahmeorgans (32) zusammenzuwirken, und dass das Schutzorgan (4) ein freies zweites Ende (4c) aufweist, das sich in Abstand zu dem Entnahmeorgan (32) und dem ersten Dichtungsstück (2) befindet.

10. System nach Anspruch 9,
**dadurch gekennzeichnet,**
**dass** das erste Ende (4b) des Schutzorgans (4) sich in Anlage an dem zweiten Dichtungsstück (5) befindet und dergestalt auf das erste Ende (32b) des Entnahmeorgans (32) geschraubt ist, dass es eine Kontermutter zur Befestigung des Entnahmeorgans (32) an dem Wulst (30a) der Entnahmeöffnung (30) bildet.

11. Verfahren des Zusammenbaus eines Systems (1) zur Versorgung mit Druckluft nach einem der Ansprüche 7 bis 10, das die aufeinander folgenden Verfahrensschritte umfasst, die darin bestehen:
a) das zweite Dichtungsstück (5) in Anlage an dem Wulst (30a) des Gehäuses (12c) des Druckluftentnahmebereichs (12) zu bringen,
b) das erste Dichtungsstück (2) in dichten Eingriff mit dem zweiten Dichtungsstück (5) anzuordnen,
c) das Schutzorgan (4) an dem Entnahmeorgan (32) insbesondere durch Verschrauben des Abschnitts mit Innengewinde (4d) des Schutzorgans (4) auf dem Außengewinde (32c) der Außenfläche (Se) des ersten Endes (32b) des Entnahmeorgans (32) zu befestigen,
d) die Gesamtanordnung, die von dem Schutzorgan (4) und dem Entnahmeorgan (32) gebildet wird, an der Entnahmeöffnung (30) zu befestigen, insbesondere durch Verschrauben des Außengewindes (32c) der Außenfläche (Se) des ersten Endes (32b) des Entnahmeorgans (32) in der Gewindebohrung (30b) der Innenfläche (Si) des Wulsts (30a), bis das Schutzorgan (4) in Kontakt mit dem zweiten Dichtungsstück (5) kommt,
e) eventuell das Schutzorgan (4) erneut an dem Entnahmeorgan (32) festzuziehen, um die feste Verbindung der Gesamtanordnung zu sichern.

## Claims

1. A system (1) for supplying pressurised air for an aircraft turbine engine (10), configured to supply pressurisation air to a portion of the aircraft for using compressed air from pressurisation air collected from a portion for collecting compressed air (12) of the aircraft turbine engine (10), **characterised in that** it comprises:
- a port (30) for collecting pressurisation air formed on a casing (12c) of the compressed air collection portion (12) of the aircraft turbine engine (10),
- a collection member (32) coupled to the collection port (30) to enable the collection and conveyance of the collected pressurisation air towards the portion for using compressed air,
- a through port (38) of the collection member (32) formed on a casing (39) of a compartment (ZC) of the turbine engine (10), said casing (39) being subject to small movements relative to the casing (12c) of the portion for collecting compressed air (12), the collection member (32) crossing the through port (38) with a freedom of movement relative to the latter during said small movements,
- a high-pressure space (33) crossed by the collection member (32), located between the casing (12c) of the portion for collecting compressed air (12) and the casing (39) of the compartment (ZC), and including pressurised air at a pressure higher than that of the collected pressurisation air,
the system (1) for supplying pressurised air also including sealing means (2) located substantially between the casing (12c) of the portion for collecting compressed air (12) and the casing (39) of the compartment (ZC) in order to form a substantially sealed separation between the high-pressure space (33) and a free space (40) communicating with the compartment (ZC) and provided around the collection member (32), in order to prevent the entry of pressurisation air from the high-pressure space (33) into the collection member (32) in the event of the latter breaking.

2. The system according to claim 1, **characterised in that** the sealing means include a first sealing part (2) disposed around the collection member (32) and into the through port (38) while having a freedom of movement relative to the latter, this first sealing part (2) being connected to the casing (12c) of the portion for collecting compressed air (12) by a sealed coupling so as to prevent a significant air leak from the high-pressure space (33) at said coupling.

3. The system according to claim 2, **characterised in that** the sealed coupling is formed by a second sealing part (5) comprising an outside annular surface forming a spherical surface portion, and **in that** the first sealing part (2) has a free end (2c) comprising an inside cylindrical surface which forms a circular line of contact with said spherical surface portion, so that the first sealing part (2) is sealingly hinged on the second sealing part (5).

4. The system according to one of the above claims, **characterised in that** it comprises a holding cover (3) attached to the casing (39) of the compartment (ZC) of the turbine engine (10) and crossed by the collection member (32), this holding cover (3) being arranged to sealingly connect the casing (39) and the sealing means (2) while enabling a freedom of movement of the sealing means (2) relative to the casing (39).

5. The system according to claim 4, taken in combination with claim 2 or 3, **characterised in that** the first sealing part (2) includes a sliding lead-through plate (2a) having a planar portion able to abut against a corresponding planar portion of the holding cover (3) while having the possibility of gliding over it, the freedom of movement of the first sealing part (2) being performed in a plane parallel to the planar portion while preventing a movement perpendicularly to this plane.

6. The system according to any of the above claims, **characterised in that** the collection port (30) is formed by a boss (30a) on the casing (12c) of the portion for collecting compressed air (12), an inner surface (Si) of which is formed by a tapped bore (30b) configured to cooperate with a threading (32c) of the outer surface (Se) of a first end (32b) of the collection member (32) to enable the attachment of the collection member (32) on the boss (30a) of the collection port (30).

7. The system according to claim 6, in combination with claim 3, **characterised in that** the second sealing part (5) is mounted on the boss (30a) of the casing (12c) of the portion for collecting compressed air (12) and includes a through opening (5a) for inserting the collection member (32).

8. The system according to claim 6 or 7, in combination with claim 3, **characterised in that** a protective member (4) forming an at least partial shell around the collection member (32) is located between the collection member (32) and the first sealing part (2) and includes an insertion cavity (4a) for the at least partial entry of the collection member (32) into the protective member (4), said protective member (4) being arranged to abut against the second sealing part (5) once the collection member (32) is attached on the boss (30a) of the collection port (30).

9. The system according to claim 8, **characterised in that** the protective member (4) includes a first end (4b) mounted on the first end (32b) of the collection member (32), the first end (4b) of the protective member (4) especially including a tapped portion (4d) intended to cooperate with a threading (32c) of the outer surface (Se) of the first end (32b) of the collection member (32), and **in that** the protective member (4) includes a second free end (4c) located at a distance from the collection member (32) and from the first sealing part (2).

10. The system according to claim 9, **characterised in that** the first end (4b) of the protective member (4) is in abutment on the second sealing part (5) and is screwed on the first end (32b) of the collection member (32) so as to make up a locknut for attaching the collection member (32) on the boss (30a) of the collection port (30).

11. A method for assembling a system (1) for supplying pressurised air according to any of claims 7 to 10, including the successive steps of:
a) positioning the second sealing part (5) in abutment on the boss (30a) of the casing (12c) of the portion for collecting compressed air (12),
b) placing the first sealing part (2) in sealed engagement with the second sealing part (5),
c) attaching the protective member (4) on the collection member (32), especially by screwing the tapped portion (4d) of the protective member (4) on the threading (32c) of the outer surface (Se) of the first end (32b) of the collection member (32),
d) attaching the assembly formed by the protective member (4) and the collection member (32) on the collection port (30), especially by screwing the threading (32c) of the outer surface (Se) of the first end (32b) of the collection member (32) in the tapped bore (30b) of the inner surface (Si) of the boss (30a), until the protective member (4) contacts the second sealing part (5),
e) possibly, clamping again the protective member (4) on the collection member (32) in order to unit the assembly.
